Europäisches Patentamt

European Patent Office

Office européen des brevets

(19)

(11) Publication number: **0 406 941 A2**

# EUROPEAN PATENT APPLICATION

(12)

(21) Application number: 90201686.4

(22) Date of filing: 26.06.90

(51) Int. Cl.⁵: **F04C 27/00**, F16C 33/24, B29D 31/00

(30) Priority: 06.07.89 GB 8915475

(43) Date of publication of application: 09.01.91 Bulletin 91/02

(84) Designated Contracting States: DE ES FR IT SE

(71) Applicant: T&N TECHNOLOGY LIMITEDTED Cawston House Cawston Rugby Warwickshire, CV22 7SA(GB)

(72) Inventor: Ferdani, Philip 36 Weston Close Dunchurch, Rugby, Warwickshire CV22 6QD(GB)

(74) Representative: Hadfield, Robert Franklin et al Bowdon House PO Box 20 Ashburton Road West Trafford Park Manchester M17 1RA(GB)

(54) Wear resistant articles.

(57) A wear-resistant article, for example a rotor vane for a pump or compressor, is made by injection moulding and comprises a matrix of liquid crystal polymer (eg a thermotropic poly(aromatic ester)) in which a solid lubricant such as graphite and fine particles of a petroleum or like coke are distributed.

EP 0 406 941 A2

## WEAR-RESISTANT ARTICLES

This invention relates to wear-resistant articles, such as bearings and rotor vanes for pumps and compressors, and is particularly concerned with the manufacture of such articles by injection moulding.

Injection moulding is a processing technique particularly well suited to the manufacture of precision engineering components from thermoplastic polymers. There have recently been put on the market certain polymeric materials, eg the poly(aromatic ester) type VECTRA (trademark) series of Celanese Limited, known as liquid crystal polymers, that is to say polymers that melt to form a phase of liquid crystals. These polymers do not require the use of added fibre for reinforcement of a matrix which they compose, and enable the production of injection mouldings which are of excellent dimensional stability, stiffness and strength and can have a degree of wear-resistance imparted to them by including in the moulding mixture a standard solid lubricant such as polytetrafluoroethylene.

In the work we have carried out that has led to the present invention, we have found that, by distributing in the matrix of liquid crystal polymer fine particles of coke as well as solid lubricant, there can be obtained a wear resistance that is good enough to permit use of the product as a bearing or a rotor vane of the kind employed to rotate with its tip in contact with a stator. We use the term "coke" with its usual meaning: the residue of amorphous carbon resulting from the distillation, out of contact with air, of coal, petroleum or like hydrogen-containing carbonaceous material of high carbon content.

Preferred proportions of said lubricant and coke by weight of the material submitted to injection moulding (and therefore of the article moulded from it) are: solid lubricant, 15-45%; coke, 5-35% , particularly 10-30%. The total filler content (solid lubricant plus coke) is preferably 20-70% by weight, particularly 25-60%.

The liquid crystal polymers are thermotropic ie they form a melt that is anisotropic. Examples are Hoechst Celanese VECTRA series A and B; VICTREX SRP 2300 and 1500 of ICI; and Dartco XYDAR. These are thermotropic polyesters, and have melting point in the range 250-425° C.

The solid lubricant employed is preferably graphite (natural or synthetic), suitably of particle size below 150 μm. As alternative there may be used the polytetrafluoroethlyene already mentioned, molybdenum disulphide, or antimony trisulphide, alone or in admixture with graphite or with one another.

The coke employed may be metallurgical coke, but is preferably a coke of very high (>95%) carbon content, especially petroleum coke, and is suitably of particle size below 150 μm. The particles of coke distributed in the matrix of liquid crystal polymer contribute to a desirable wear-resistance by virtue of their hardness.

As a liquid lubricant to assist injection moulding a silicone fluid may be included in the moulding mixture, in an amount up to about 2% by weight.

As illustrated in the Examples later, the invention has particular application in the manufacture of injection-moulded rotor vanes intended to operate in contact with a stator of metal such as iron.

Examples of moulding mixtures for the manufacture of bearings by injection moulding are:

|  | Parts by weight % | Parts by weight % |
|---|---|---|
| Liquid crystal polymer | 50 | 50 |
| Graphite | 24.5 | 37 |
| Petroleum coke | 24.5 | 12 |
| Silicone oil | 1 | 1 |

The invention will now be further described with reference to the following Examples.

### Example 1

Liquid crystal polymer (the poly(aromatic ester) VICTREX SRP 2300 of ICI Limited, dried to manufacturer's specification; 45 parts by weight), graphite (LONZA KS 5/75; 42 parts by weight), petroleum coke (LONZA PC40; 12 parts by weight; 99% carbon; particle size <48 μm; specific surface area - BET - 9m$^2$ /g) and silicone oil (Dow Corning; polydimethylsiloxane DC 200/30,000; 1 part by weight) were mixed and the

2

mixture was compounded in a twin-screw extruder at 285° C. The extrudate was then granulated. Before injection moulding the granules were dried at 150° C. for 3 hours.

In injection moulding the vanes (ca 3mm x 34.8mm x 30mm) for a small dry-running vacuum pump, a full-width fan gate was employed, with the following conditions:

| | |
|---|---|
| barrel temperature zone 1 | 250° C |
| barrel temperature zone 2 | 265° C |
| barrel temperature zone 3 | 275° C |
| barrel temperature nozzle | 285° C |
| tool temperature | 80° C |
| cycle time: injection | 15 sec |
| cooling | 15 sec |
| back pressure | minimum |

Finally, each moulding was machined to remove the gate.

## Example 2

Liquid crystal polymer (VECTRA B950 dried to manufacturer's specification; 50 parts by weight), petroleum coke (LONZA PC40; 25 parts by weight) and graphite (LONZA KS 5/75; 25 parts by weight) were mixed and the mixture was compounded in a twin screw extruder at 290° C. The extruded strand was cooled in a water bath and then granulated. Before injection moulding the granules were dried at 150° C for 3 hours.

In injection moulding vanes generally as in Example 1, the following conditions were employed:

| | |
|---|---|
| barrel temperature zone 1 | 280° C |
| barrel temperature zone 2 | 290° C |
| barrel temperature zone 3 | 300° C |
| barrel temperature nozzle | 310° C |
| tool temperature | 120° C |
| cycle time: injection | 20 sec |
| cooling | 15 sec |
| back pressure | minimum |

## Examples 3 and 4

Following generally the procedures of Examples 1 and 2, rotor vanes were made by injection moulding the following compositions:

| 3 | | 4 | |
|---|---|---|---|
| VECTRA A950 | 50% | VECTRA B950 | 50% |
| petroleum coke | 12.5% | petroleum coke | 12.5% |
| graphite | 37.5% | graphite | 37.5% |

## Product properties

3

Wear resistance of the moulded rotor vanes was assessed by use in a GAST 0522 dry-running vacuum pump at the maximum vacuum obtainable. The vanes were accurately weighed and measured at regular intervals in the running time 300-2500 hours, and the wear and weight loss rates were calculated. The results (interpolated) for 1000-hour running are shown in Table 1 below, and are compared with those given by a vane E currently commercially available made from a conventional high temperature thermoplastic, carbon fibre and graphite.

Table 2 shows the mechanical properties of the vane materials.

TABLE 1

| MATERIAL | COMPOSITION by weight | | WEAR RATE μm/hr | WEIGHT LOSS RATE mg/hr | TEMP °C | VAC mmHg |
|---|---|---|---|---|---|---|
| Example 1 | VICTREX 2300<br>petroleum coke<br>graphite<br>silicone oil | 45%<br>12%<br>42%<br>1% | 1.2 | 0.23 | 74 | 27 |
| Example 2 | VECTRA B950<br>petroleum coke<br>graphite | 50%<br>25%<br>25% | 1.3 | 0.37 | 79 | 27 |
| Example 3 | VECTRA A950<br>petroleum coke<br>graphite | 50%<br>12.5%<br>37.5% | 1.5 | 0.29 | 72 | 25 |
| Example 4 | VECTRA B950<br>petroleum coke<br>graphite | 50%<br>12.5%<br>37.5% | 1.1 | 0.29 | 69 | 27 |
| E | Conventional high-temperature thermoplastic, carbon fibre reinforcement and graphite | | 1.8 | 0.37 | 85 | 27 |

TABLE 2

| MATERIAL | FLEXURAL STRENGTH (MPa) | FLEXURAL MODULUS (GPa) | TENSILE STRENGTH (MPa) | LINEAR COEFFICIENT OF THERMAL EXPANSION (30-150 °C)/°C |
|---|---|---|---|---|
| Example 1 | 127 | 19.3 | 71 | 10.3 |
| Example 2 | 152 | 15.5 | 92 | 11.9 |
| Example 3 | 136 | 15.0 | 86 | 4.4 |
| Example 4 | 123 | 12.0 | 70 | 12.0 |
| E | 183 | 12.6 | 125 | 11.0 |

**Claims**

1 Wear-resistant article made by injection moulding and comprising a matrix of liquid crystal polymer in which a solid lubricant and fine particles of a coke are distributed.

2 Wear-resistant article according to claim 1, in which the solid lubricant is graphite.

3 Wear-resistant article according to claim 1 or 2, in which the coke is derived from petroleum.

4 Wear-resistant article according to any of claims 1 to 3, in which the weight proportions of solid lubricant and the coke are respectively in the ranges 15-45% and 5-35%.

5 Wear-resistant article according to claim 4, in which the total filler content is (by weight) in the range 20-70%.

6 Wear-resistant article according to any of claims 1 to 5, in which the liquid crystal polymer is a poly-(aromatic ester).

7 Wear-resistant article according to any preceding claim in the form of a rotor vane.

8 A process for the manufacture of a wear-resistant article by injection-moulding a moulding composition which comprises a liquid crystal polymer and a solid lubricant, wherein said moulding composition includes fine particles of a coke.